# FASCICULE DE BREVET EUROPEEN

(11) **EP 2 408 585 B1**
(45) Date de publication et mention de la délivrance du brevet: **08.04.2015**
(21) Numéro de dépôt: 10710084.4
(22) Date de dépôt: 25.02.2010
(51) Int. Cl.: B23K 26/02

(54) **DISPOSITIF DE SOUDOBRASAGE**
LÖTSCHWEISSVORRICHTUNG
BRAZE-WELDING DEVICE

(30) Priorité: 17.03.2009 FR 0951698
(43) Date de publication de la demande: 25.01.2012
(73) Titulaire: PEUGEOT CITROËN AUTOMOBILES S.A., 78140 Vélizy Villacoublay (FR)
(72) Inventeur: GELABERT ARRIETA, Ignacio, E-28914 Leganes (ES); MORISSET, Philippe, F-35740 Pace (FR); PONCELET, Frédéric, F-70400 Verlans (FR); EPERT, Didier, F-22190 Plerin (FR); AUGER, Patrice, F-78650 Beynes (FR)
(74) Mandataire: Fosse, Danièle
(86) Numéro de dépôt international: PCT/FR2010/050325
(87) Numéro de publication internationale: WO 2010/106263

(56) Documents cités:
- DE-A1-102007 002 856
- DE-U1-202007 000 505
- JP-A- 11 320 153
- US-A- 4 507 540
- US-A1- 2007 221 637

## Description

La présente invention se rapporte, d'une part, à un procédé d'assemblage par soudo-brasage au laser entre deux pièces et plus particulièrement destiné à l'assemblage d'un pavillon d'un véhicule automobile tel que revendiqué dans la revendication 8, et d'autre part, à un dispositif permettant sa mise en oeuvre tel que revendiqué dans le préambule de la revendication 1.

Le brasage est une technique d'assemblage de deux matériaux à l'aide d'un métal d'apport de nature différente possédant une température de fusion inférieure à celle des matériaux à assembler et apte à mouiller convenablement les surfaces desdits matériaux, ces surfaces ne participant pas par leur fusion à la constitution du joint brasé.

En pratique, le brasage est réalisé par interposition du métal d'apport entre les deux composants à assembler, la zone à braser étant ensuite chauffée à une température permettant la fusion du métal d'apport mais pas celle des composants à assembler. Le métal d'apport liquéfié mouille les surfaces des deux composants à assembler puis est refroidi de manière à se solidifier entre les deux composants pour en assurer la liaison.

Le chauffage de la zone à braser peut classiquement se faire par la flamme d'un chalumeau, un arc électrique, ou encore un laser.

Le métal d'apport est généralement de l'étain, du cuivre, de l'argent, de l'aluminium, du nickel ou encore des alliages de métaux précieux.

Dans certains domaines techniques, comme le domaine automobile par exemple, l'assemblage par brasage permet d'éviter de nombreux inconvénients d'un assemblage traditionnel par soudure électrique, notamment le faits qu'un tel mode d'assemblage nécessite la réalisation de points de soudure électriques (abrégés en PSE) au fond d'une gorge de jonction entre les deux pièces à assembler, ladite gorge étant masquée par une bande enjoliveur.

Un assemblage par soudo-brasage permet une jonction continue des pièces à assembler, la disparition de la gorge de jonction, et donc la bande enjoliveur. Il s'ensuit de nombreux avantages esthétiques et mécaniques.

Afin de répondre aux critères esthétiques et mécaniques, le cordon de brasage doit être le plus possible exempt d'irrégularités et étanche, c'est-à-dire exempt de trou.

Pour ce faire, le positionnement entre elles des pièces à assembler revêt une importance particulière.

Dans le cas d'un pavillon d'un véhicule automobile, par exemple, destiné à être joint à un côté d'un habitacle dudit véhicule, il convient que le jeu d'accostage à la jointure du pavillon avec le côté de l'habitacle soit le plus réduit possible, de préférence nul et au maximum d'environ 0,3 mm au moment du brasage.

Il existe donc un besoin pour un dispositif et/ou procédé permettant de garantir cette valeur maximale du jeu d'accostage.

Une première solution connue consiste à utiliser un conformateur dont la fonction est de presser le pavillon sur le côté de l'habitacle au moyen de touches d'appuis discrètes prévues en grandes quantités. On notera qu'un tel dispositif est généralement complexe à installer et qu'ils sont difficilement compatible avec plusieurs profils de véhicules. Il faut donc autant de conformateurs différents que de forme de véhicule.

De plus, afin de pouvoir moduler l'effort de pressage, il est nécessaire que chaque touche soit réglable indépendamment ce qui augmente la complexité d'installation et le temps de mise en place, et par voie de conséquence pénalise le temps de cycle de l'opération sur la chaîne de montage du véhicule.

Des solutions polyvalentes utilisent un élément presseur de type galet ou roulette en vue de souder deux pièces entre elles. Ces dispositifs sont conçus pour une opération de soudure et les éléments presseurs sont mis en place dans le plan de soudure en vue de plaquer les pièces à souder l'une contre l'autre.

De tels dispositifs sont par exemple décrits dans les documents JP2000-288756, JP11-347763, JP8-090264.

Ces solutions ne sont généralement pas applicables au soudobrasage d'un pavillon de véhicule automobile car la nature de l'assemblage ainsi que les contraintes à exercer sur les pièces à braser sont différentes. En effet, pour effectuer un soudobrasage, il n'est pas suffisant de plaquer les pièces à assembler (généralement des tôles) à l'endroit de l'assemblage, car il faut maîtriser la géométrie de l'ensemble pavillon / côté de caisse.

D'autre part, les éléments presseurs utilisés dans ces solutions ne permettent généralement pas d'avoir un résultat qui garantisse la conformité esthétique de l'assemblage. En effet, si l'on applique l'effort nécessaire pour rattraper le jeu entre les pièces, il y aura toujours du marquage et une déformation du pavillon.

Des essais réalisés avec ce type d'installation ont montré plusieurs incompatibilités. Tout d'abord, le dispositif n'est généralement pas capable de maintenir l'accostage entre les tôles sur toute la longueur. De plus, dans les zones où on trouve un jeu initial plus important que la molette n'est généralement pas capable de rattraper et que l'on vient donc fixer avec le métal d'apport. Il s'ensuit un phénomène accumulatif qui fait que le jeu existant entre les tôles augmente pendant l'opération de soudobrasage, ce qui provoque l'effondrement du fil d'apport et une qualité d'assemblage inacceptable.

On notera également que la molette provoque la déformation du pavillon et des marquages sur toute la longueur de l'assemblage. DE 10 2007 002 856 A1 décrit un dispositif de soudobrasage suivant le préambule de la revendication 1.

La présente invention vise à pallier les inconvénients précédemment mentionnés et consiste pour ce faire en un dispositif de soudobrasage suivant la revendication 1.

Ainsi, en écartant la molette presseuse du moyen de fusion selon une direction d'une ligne de brasage, celle-ci peut venir exercer la pression de maintien nécessaire avant d'effectuer l'étape de brasage. Il a été constaté de manière surprenante qu'une telle disposition permet une amélioration importante du rattrapage du jeu entre les pièces sur toute la longueur de la ligne de brasage.

Préférentiellement, la distance d'écartement entre la molette presseuse et le moyen de fusion est comprise entre 90 et 170 mm.

Préférentiellement encore, la distance d'écartement entre la molette presseuse et le moyen de fusion est d'environ 130 mm.

On prévoiera également avantageusement que la molette presseuse comprend une bande d'enrobage en matériau souple, caoutchouc par exemple, afin d'encore diminuer les risques de marquage et déformation.

Avantageusement, le moyen de fusion est un dispositif laser.

De manière avantageuse, le moyen de pression peut être positionné au choix d'un côté ou de l'autre du moyen de distribution et du moyen de fusion, notamment par un système d'installation sur rails de guidage.

Avantageusement, le moyen de pression est disposé et orienté de manière à exercer sur la molette une force de pression selon une direction inclinée par rapport à une direction normale à la surface de l'élément sur lequel la molette est destinée à prendre appui, et vers le deuxième élément.

Le moyen de pression sera préférentiellement un vérin.

Ainsi, en prévoyant un vérin presseur incliné et orienté dans une direction selon laquelle doit s'exercer la pression, on limite la présence de marquage résiduel ou déformation après assemblage. En effet, la pression exercée par le vérin peut être calculée comme étant la pression nécessaire, aucune force de pression n'étant perdue dans une composante.

Contrairement aux vérins orientés sensiblement verticalement, et dans lesquels la composante verticale de la pression reste la plus importante et entraîne ce marquage, la pression du vérin dans un dispositif selon l'invention peut être réglée pour correspondre au plus proche à la pression nécessaire et suffisante pour maintenir les deux pièces, sans dépasser la pression de marquage. La composante verticale de la pression étant plus faible, il y a également moins de risque de marquage.

Bien que présenté en complément de la caractéristique selon laquelle la molette presseuse est écartée du moyen de fusion, rien ne l'y limite.

De manière préférentielle, l'inclinaison du vérin sera réglable.

La présente invention se rapporte encore à un procédé de soudobrasage d'un pavillon d'un véhicule automobile et d'un côté d'un habitacle dudit véhicule automobile, comprenant les étapes visant à :
- soudobraser les éléments à assembler selon une ligne de brasage à l'aide d'un dispositif selon l'invention, la molette presseuse venant exercer sa pression avant passage du moyen de fusion.

Avantageusement, le procédé comprend une étape préliminaire visant à réaliser au moins un point de soudure entre les éléments à assembler de manière traditionnelle, notamment par soudure par résistance électrique.

La présente invention sera mieux comprise à la lumière de la description détaillée qui suit en regard du dessin annexé dans lequel :
- La figure 1 est une représentation schématique de face d'un bras robot équipé d'un dispositif selon l'invention effectuant le brasage d'un pavillon et d'un côté d'habitacle d'un véhicule automobile.
- La figure 2 est une vue de côté du dispositif de la figure 1.
- La figure 3 illustre l'étape préliminaire de soudure discrète du pavillon sur l'habitacle.
- La figure 4 est une représentation d'un dispositif selon l'invention permettant de souder les deux côté du pavillon avec un seul bras robotisé.

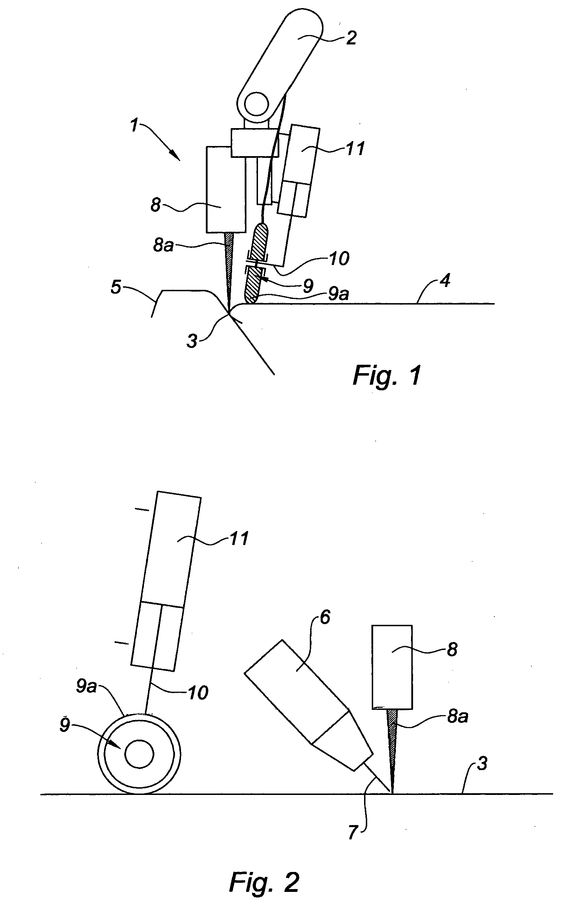

Les figures 1 et 2 montrent un dispositif 1 de soudobrasage selon l'invention formant une tête d'un bras robotisé 2 apte à se déplacer le long d'une ligne de brasure 3 entre un pavillon 4 d'un véhicule automobile et un côté 5 d'un habitacle dudit véhicule.

Le dispositif 1 comprend un moyen de distribution 6 d'un métal d'apport 7 à destination d'une zone à braser située sur la ligne de brasure 3, ledit moyen de distribution 6 étant associé à un moyen de fusion 8 apte à permettre la fusion du métal d'apport 7 au niveau de ladite zone à braser 3.

En l'espèce, le moyen de fusion est une tête laser 8 apte à émettre un faisceau laser 8a en direction de la zone à braser.

Le dispositif 1 comprend en outre une molette presseuse 9 présentant, conformément à un aspect de l'invention, une bande périphérique 9a en caoutchouc et montée mobile sur un bras 10 monté à l'encontre d'un vérin 11.

Avantageusement, la mollette presseuse 9 et le vérin 11 seront montés dans le poignet du bras robotisé 2 indépendamment de la tête laser 8 et du moyen de distribution 6 en métal d'apport 7 de manière à pouvoir être réglé séparément de ces derniers.

La molette presseuse 9 et le bras mobile 10 sont conformés et positionnés de manière à pouvoir, sous l'effet du vérin 11, exercer un placage du pavillon 4 contre le côté de l'habitacle 5.

Conformément à un aspect de l'invention et pour optimiser la force de pression et réduire le marquage, le vérin 11 est disposé et orienté de manière exercer sur la molette presseuse 9 une force de pression selon une direction inclinée par rapport à une direction normale à la surface du pavillon 4 et en direction du côté de l'habitacle 5.

En l'espèce, le vérin 11 est donc incliné par rapport à une direction sensiblement verticale et en direction du côté de l'habitacle 5.

Conformément au premier aspect de l'invention, et comme visible sur la figure 2, la molette presseuse 9 est décalée par rapport à la zone de brasure selon un axe de la ligne de brasure.

Plus précisément, lors de l'opération de brasage, la molette presseuse 9 est située avant la zone à braser par rapport au sens de déplacement le long de la ligne de brasure 3.

En l'espèce, le décalage est d'environ 130 mm.

Selon l'invention une opération d'installation d'un pavillon 4 sur un habitacle se déroule de la façon suivante.

Tout d'abord un robot vient mettre en place le pavillon 4 sur l'habitacle 5.

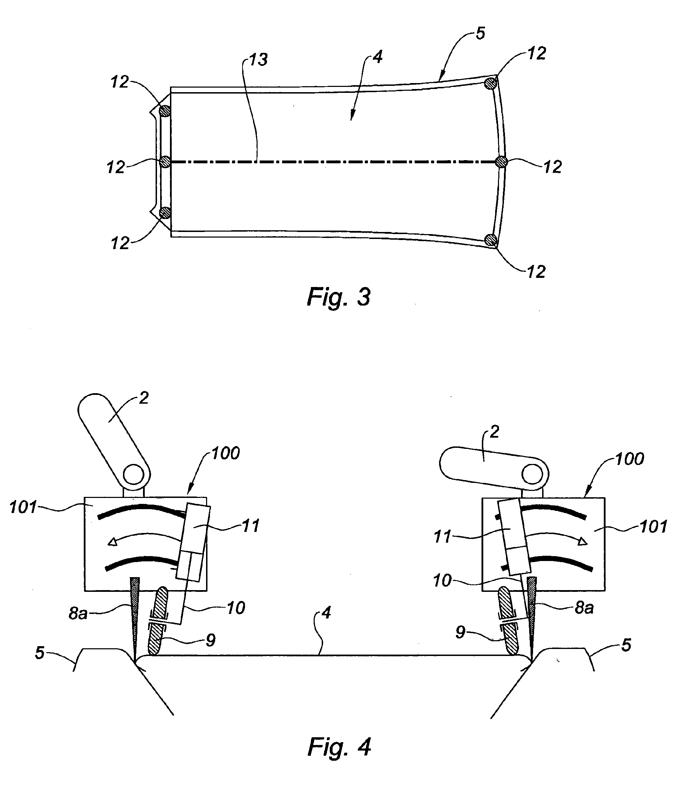

On réalise ensuite des soudures 12 discrètes par soudure à résistance électrique à l'avant et à l'arrière du pavillon 4 (figure 3).

L'ensemble est ensuite amené dans la cabine laser pour l'opération de brasage.

Le pavillon 4 arrive dans la cabine laser pointé sur ses traverses avant et arrière. Cela permet de garantir l'accostage entre les pièces au début et fin du cordon. Cela permet également de rendre indépendant la géométrie de chaque côté en créant une fibre neutre 13 au milieu du pavillon 4. De cette façon, on peut soudobraser les deux côtés du pavillon de façon séparée l'un après l'autre.

Lors de l'opération de brasage à l'aide du dispositif 1 précédemment décrit, la molette presseuse 9 rattrape le jeu existant entre le pavillon 4 et le côté de l'habitacle 5 pour réaliser la brasure.

La molette presseuse 9 étant préférentiellement réglée dans une position avancée par rapport au faisceau laser 8a, le pavillon 4 est donc conformé avant réalisation du soudobrasage. De cette façon, on garanti le rattrapage du jeu dans toute la longueur.

Comme illustré sur la figure 4, on pourra réaliser un dispositif 100 permettant de soudobraser les deux côtés du pavillon 4 avec le même bras robotisé 2.

Pour ce faire, le vérin 10 du dispositif 100 est monté sur un bloc de guidage 101 permettant d'orienter le vérin et de le basculer d'un côté ou de l'autre de la tête laser 8.

## Revendications

1. Dispositif (1, 100) de soudobrasage par laser, comprenant un moyen de distribution (6) d'un métal d'apport (7) à destination d'une zone à braser située entre au moins deux éléments (4, 5) à assembler par brasage, ledit moyen de distribution étant associé à un moyen de fusion (8) apte à permettre la fusion du métal d'apport au niveau de ladite zone à braser, le dispositif de soudobrasage par laser comprenant en outre au moins une molette presseuse (9) conformée et positionnée de manière à pouvoir venir exercer un placage sur une surface d'un des éléments à assembler à l'aide dudit dispositif de soudobrasage, ladite molette presseuse étant montée mobile à l'encontre d'un moyen de pression (11), **caractérisé en ce que** la molette presseuse (9) est écartée du moyen de fusion (8) selon un axe correspondant à une direction d'une ligne de brasage (3) et située avant la zone à braser par rapport au sens de déplacement le long de la ligne de brasure (3).

2. Dispositif (1) selon la revendication 1, **caractérisé en ce que** la distance d'écartement entre la molette presseuse (9) et le moyen de fusion (8) est comprise entre 90 et 170 mm.

3. Dispositif (1) selon la revendication 2, **caractérisé en ce que** la distance d'écartement entre la molette presseuse (9) et le moyen de fusion (8) est d'environ 130 mm.

4. Dispositif (1) selon l'une quelconque des revendications 1 à 3, **caractérisé en ce que** la molette presseuse (9) comprend une bande d'enrobage en matériau souple, notamment en caoutchouc.

5. Dispositif (1, 100) de soudobrasage selon l'une quelconque des revendications 1 à 4, **caractérisé en ce que** le moyen de fusion est un dispositif laser (8).

6. Dispositif (100) selon l'une quelconque des revendications 1 à 5, **caractérisé en ce que** le moyen de pression (11) peut être positionné au choix d'un côté ou de l'autre de du moyen de distribution (6) et du moyen de fusion (8), notamment par un système d'installation sur rails de guidage (101).

7. Dispositif (1, 100) selon l'une quelconque des revendications 1 à 6, **caractérisé en ce que** le moyen de pression est disposé et orienté de manière à exercer sur la molette (9) une force de pression selon une direction inclinée par rapport à une direction normale à la surface de l'élément (4) sur lequel la molette est destinée à prendre appui, et vers le deuxième élément (5).

8. Procédé de soudobrasage par laser d'un pavillon (4) d'un véhicule automobile et d'un côté d'un habitacle (5) dudit véhicule automobile, comprenant les étapes visant à :
- soudobraser les éléments à assembler selon une ligne de brasage (3) à l'aide d'un dispositif (1, 100, 2) selon l'une quelconque des revendications 1 à 7, la molette presseuse (9) venant exercer sa pression avant passage du moyen de fusion (8).

9. Procédé de soudobrasage selon la revendication 8, **caractérisé en ce qu'**il comprend une étape préliminaire visant à réaliser au moins un point de soudure (12) entre les éléments (4, 5) à assembler de manière traditionnelle, notamment par soudure à résistance électrique.

## Patentansprüche

1. Vorrichtung (1, 100) zum Laser-Schweißlöten, ein Hilfsmittel zum Zuführen (6) eines Lötmetalls (7) in Richtung einer Lötzone umfassend, die sich zwischen zumindest zwei Elementen (4, 5) befindet, die mittels Löten zusammenzufügen sind, wobei das besagte Hilfsmittel zum Zuführen einer Schmelzvorrichtung (8) zugeordnet ist, die in der Lage ist, das Lötmetall im Bereich der besagten Lötzone zum Schmelzen zu bringen, wobei die Vorrichtung zum Laser-Schweißlöten darüber hinaus zumindest ein Pressrad (9) umfasst, das derart ausgeformt und positioniert ist, um eine Plattierung auf einer Oberfläche eines der Elemente auszuüben, die mithilfe der besagten Schweißlötvorrichtung verbunden werden sollen, wobei das besagte Pressrad gegen ein Druckmittel (11) bewegbar montiert ist, **dadurch gekennzeichnet, dass** das Pressrad (9) von der Schmelzvorrichtung (8) entlang einer Achse abgespreizt wird, die einer Richtung einer Lötbahn (3) entspricht, und die sich im Verhältnis zur Bewegungsrichtung entlang der Lötbahn (3) vor der Lötzone befindet.

2. Vorrichtung (1) nach Anspruch 1, **dadurch gekennzeichnet, dass** der Abspreizabstand zwischen dem Pressrad (9) und der Schmelzvorrichtung (8) zwischen 90 und 170 mm liegt.

3. Vorrichtung (1) nach Anspruch 2, **dadurch gekennzeichnet, dass** der Abspreizabstand zwischen dem Pressrad (9) und der Schmelzvorrichtung (8) bei etwa 130 mm liegt.

4. Vorrichtung (1) nach irgendeinem der Ansprüche 1 bis 3, **dadurch gekennzeichnet, dass** das Pressrad (9) ein Hüllband aus einem flexiblen Material, vor allem aus Gummi umfasst.

5. Vorrichtung (1, 100) zum Laser-Schweißlöten nach irgendeinem der Ansprüche 1 bis 4, **dadurch gekennzeichnet, dass** die Schmelzvorrichtung ein Laser ist (8).

6. Vorrichtung (100) nach irgendeinem der Ansprüche 1 bis 5, **dadurch gekennzeichnet, dass** das Druckmittel (11) wahlweise auf der einen oder der anderen Seite des Hilfsmittels zum Zuführen (6) und der Schmelzvorrichtung (8), vor allem durch ein Installationssystem auf Führungsschienen (101) positioniert werden kann.

7. Vorrichtung (1, 100) nach irgendeinem der Ansprüche 1 bis 6, **dadurch gekennzeichnet, dass** das Druckmittel derart angeordnet und ausgerichtet ist, dass es eine Druckkraft auf das Rad (9) ausübt, die in eine im Verhältnis zu einer normalen Richtung an der Oberfläche des Elements (4), an dem sich das Rad anlegen soll, geneigte Richtung und in Richtung des zweiten Elements (5) verläuft.

8. Laser-Schweißlötverfahren für ein Dach (4) eines Kraftfahrzeugs und für eine Seite einer Fahrgastzelle (5) des besagten Kraftfahrzeugs, umfassend die Schritte, die auf folgendes abzielen:
- das Schweißlöten der Elemente zu deren Verbindung entlang einer Lötbahn (3) mithilfe einer Vorrichtung (1, 100, 2) nach irgendeinem der Ansprüche 1 bis 7, wobei das Pressrad (9) seinen Druck vor dem Durchlauf der Schmelzvorrichtung (8) ausübt.

9. Schweißlötverfahren nach Anspruch 8, **dadurch gekennzeichnet, dass** es einen Vorbereitungsschritt umfasst, der darauf abzielt, auf traditionelle Art und Weise, vor allem durch Punktschweißen, zumindest einen Schweißpunkt (12) zwischen den Elementen (4, 5) zu setzen, die miteinander zu verbinden sind.

## Claims

1. Laser braze-welding device (1, 100) including a means (6) for dispensing a filler metal (7) to an area to be brazed, located between at least two elements (4, 5) to be assembled by brazing, said dispensing means being associated with a melting means (8) capable of melting the filler metal at said area to be brazed, the laser braze-welding device further comprising at least one press wheel (9) shaped and positioned such that it can apply a pressure on a surface of one of the elements to be assembled using said braze-welding device, said press wheel being mounted so as to be mobile relative to a pressure means (11), **characterised in that** the press wheel (9) is positioned at a distance from the melting means (8) along an axis corresponding to a direction of a brazing line (3) and located before the area to be brazed in relation to the direction of movement along the brazing line (3).

2. Device (1) according to claim 1, **characterised in that** the distance between the press wheel (9) and the melting means (8) is between 90 and 170 mm.

3. Device (1) according to claim 2, **characterised in that** the distance between the press wheel (9) and the melting means (8) is approximately 130 mm.

4. Device (1) according to any one of claims 1 to 3, **characterised in that** the press wheel (9) comprises a coating tape made from a flexible material, in particular made from rubber.

5. Braze-welding device (1, 100) according to any one of claims 1 to 4, **characterised in that** the melting means is a laser device (8).

6. Device (100) according to any one of claims 1 to 5, **characterised in that** the pressure means (11) can be positioned on either side of the dispensing means (6) and the melting means (8), in particular via an installation system on guide rails (101).

7. Device (1, 100) according to any one of claims 1 to 6, **characterised in that** the pressure means is positioned and oriented in such a way as to apply on the wheel (9) a pressure force along an inclined direction in relation to a normal direction at the surface of the element (4) against which the wheel is designed to rest, and towards the second element (5).

8. Method for laser braze-welding a roof panel (4) of a motor vehicle and a side of a cabin (5) of said motor vehicle, comprising steps intended to:
- braze-weld the elements to be assembled along a brazing line (3) using a device (1, 100, 2) according to any one of claims 1 to 7, wherein the press wheel (9) applies its pressure before the passage of the melting means (8).

9. Braze-welding method according to claim 8, **characterised in that** it comprises a preliminary step designed to produce at least one welding spot (12) between the elements (4, 5) to be assembled in a classic manner, in particular by electric resistance welding.
